# EUROPEAN PATENT APPLICATION

(11) **EP 4 618 288 A1**
(43) Date of publication of application: **17.09.2025**
(21) Application number: 24203979.0
(22) Date of filing: 01.10.2024
(51) Int. Cl.: H01M 50/403, H01M 50/431, H01M 50/446, H01M 50/449, H01M 50/491

(54) **HIGH PERFORMANCE BATTERY SEPARATOR MEMBRANE**

(30) Priority: 13.03.2024 US 202418604109
(71) Applicant: Viavi Solutions Inc., Chandler, AZ 85286 (US)
(72) Inventor: SEYDEL, Johannes P., 94952 Petaluma (US); ZIEBA, Jaroslaw, 95405 Santa Rosa (US); KOHLMANN, Paul T., 95492 Windsor (US)
(74) Representative: Murgitroyd & Company

(57) **Abstract**

A separator membrane may include a porous carrier. The separator membrane may include a magnesium fluoride (MgF₂) coating on at least a portion of the porous carrier. A distribution of a pore size of the separator membrane and a surface energy of the separator membrane may be at least partially determined by the MgF₂ coating.

## Description

### BACKGROUND

An secondary battery cell may include a separator membrane between an anode of the battery cell and a cathode of the battery cell. The separator membrane serves to prevent direct contact between the electrodes of the secondary battery cell to avert short circuits and potential hazards. Generally, the separator membrane comprises a porous, electrically insulating material, such as porous polyethylene or porous polypropylene, in order to allow the passage of ions while blocking electron flow between anode and cathode. This selective permeability facilitates ion movement through an electrolyte of the secondary battery cell, which supports electrochemical reactions that generate electricity.

### SUMMARY

In some implementations, a separator membrane includes a porous carrier, and a magnesium fluoride (MgF₂) coating on at least a portion of the porous carrier, wherein a distribution of a pore size of the separator membrane and a surface energy of the separator membrane are at least partially determined by the MgF₂ coating.

The separator membrane may further comprise an alumina (Al₂O₃) material on at least a portion of the MgF₂ coating.

The separator membrane may further comprise a magnesium oxide (MgO) material on or within at least a portion of the MgF₂ coating.

The separator membrane may further comprise a magnesium oxyfluoride (MgₓF_{y}O_{z}, where 1 ≤ x ≤ 4, 1 ≤ y ≤5, 1 ≤ z ≤ 4) material on or within at least a portion of the MgF₂ coating.

The porous carrier may comprise at least one of an organic material or an inorganic material.

The surface energy of the separator membrane may be within a range of approximately 35 millinewtons per meter (mN/m) to approximately 1000 mN/m.

The distribution of the pore size may comprise pore sizes in a range from approximately 2 nanometers (nm) to approximately 1000 nm.

In some implementations, a separator membrane includes a porous carrier, and as MgF₂ material that at least partially coats the porous carrier, wherein the MgF₂ material partially determines a pore size distribution of the separator membrane.

The pore size distribution of the separator membrane may comprise pore sizes in a range from approximately 2 nanometers (nm) to approximately 1000 nm.

The MgF₂ material may at least partially control a surface energy of the separator membrane.

The surface energy of the separator membrane may be within a range of approximately 35 millinewtons per meter (mN/m) to approximately 1000 mN/m.

The separator membrane may further comprise an alumina (Al₂O₃) material on at least a portion of the MgF₂ coating.

The separator membrane may further comprise a magnesium oxide (MgO) material on or within at least a portion of the MgF₂ coating.

The separator membrane may further comprise a magnesium oxyfluoride (MgₓF_{y}O_{z}, where 1 ≤ x ≤ 4, 1 ≤ y ≤5, 1 ≤ z ≤ 4) material on or within at least a portion of the MgF₂ coating.

The porous carrier may comprise an organic polymer, an inorganic polymer, or a combination thereof.

In some implementations, a separator membrane includes a porous carrier, and a MgF₂ material that at least partially coats the carrier membrane, wherein the MgF₂ material at least partially controls a surface energy of the separator membrane.

The MgF₂ material may partially determine a pore size distribution of the separator membrane.

The separator membrane may further comprise an alumina (Al₂O₃) material on at least a portion of the MgF₂ coating.

The separator membrane may further comprise a magnesium oxide (MgO) material on or within at least a portion of the MgF₂ coating.

The separator membrane may further comprise a magnesium oxyfluoride (MgₓF_{y}O_{z}, where 1 ≤ x ≤ 4, 1 ≤ y ≤5 1 ≤ z ≤ 4) material on or within at least a portion of the MgF₂ coating.

### BRIEF DESCRIPTION OF THE DRAWINGS

Figs. 1A-1G are diagrams illustrating examples of a high performance separator membrane described herein.
Fig. 2 is a diagram illustrating an example associated with a battery cell that includes the high performance separator membrane described herein.

### DETAILED DESCRIPTION

The following detailed description of example implementations refers to the accompanying drawings. The same reference numbers in different drawings may identify the same or similar elements.

A typical secondary battery cell includes a polyolefin separator membrane. Notably, polyolefins are phase stable up to their melting temperature. Polyethylene for example has a melting temperature range of approximately 85 degrees Celsius (°C) to approximately 135 °C. This means that a typical separator membrane (e.g., a separator membrane comprising polyolefin or a similar material) cannot provide mechanical stability when the melting temperature of the separator membrane material is exceeded. Furthermore, a conventional membrane separator is not an effective mechanical barrier against cell shortening by dendrites that can damage the separator membrane. Additionally, polyolefins and other similar materials have a relatively low surface energy, which limits electrolyte wetting and reduces charge transport of an active species (e.g., since the electrolyte cannot properly wet a surface of the separator membrane). A secondary battery cell that utilizes standard separator material chemistry exhibits performance limits that affect possible use of the secondary battery cell in different applications, as well limiting maximum charge speed.

Some implementations described herein provide a high performance separator membrane. In some implementations, the separator membrane comprises a porous carrier, and a magnesium fluoride (MgF₂) coating on at least a portion of the porous carrier. Here, a distribution of a pore size of the separator membrane and a surface energy of the separator membrane are at least partially determined by the MgF₂ coating.

In some implementations, versatility of the separator membrane described herein is increased (e.g., as compared to a conventional separator membrane) by enabling a porosity of the separator membrane and/or a surface energy of the separator membrane to be engineered (e.g., such that porosity and/or surface energy can be controlled to achieve a desired target). Further, the separator membrane described herein provides improved thermal and mechanical stability. Additionally, the separator membrane described herein can be used in a variety of battery cell chemistries, such as ternary lithium (Li-NMC), lithium iron phosphate (LFP), lithium sulfur, sodium ion, or another type of battery cell chemistry. Further, the separator membrane described herein provides improved charge transfer through the separator membrane, thereby improving battery cell performance, reducing charge time, and increasing a maximum charge/discharge current. Additional details are provided below.

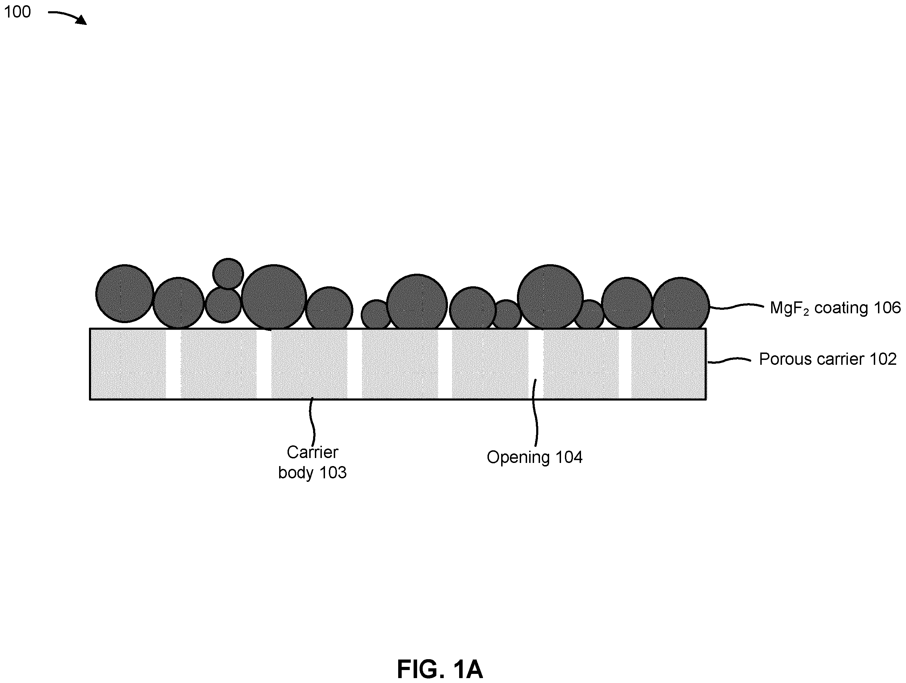

Figs. 1A-1G are diagram illustrating examples of a high performance separator membrane 100 (herein referred to as separator membrane 100). In some implementations, as shown in Figs. 1A-1D the separator membrane 100 may include a porous carrier 102, and a MgF₂ coating 106 on at least a portion of (i.e., that at least partially coats) the porous carrier 102.

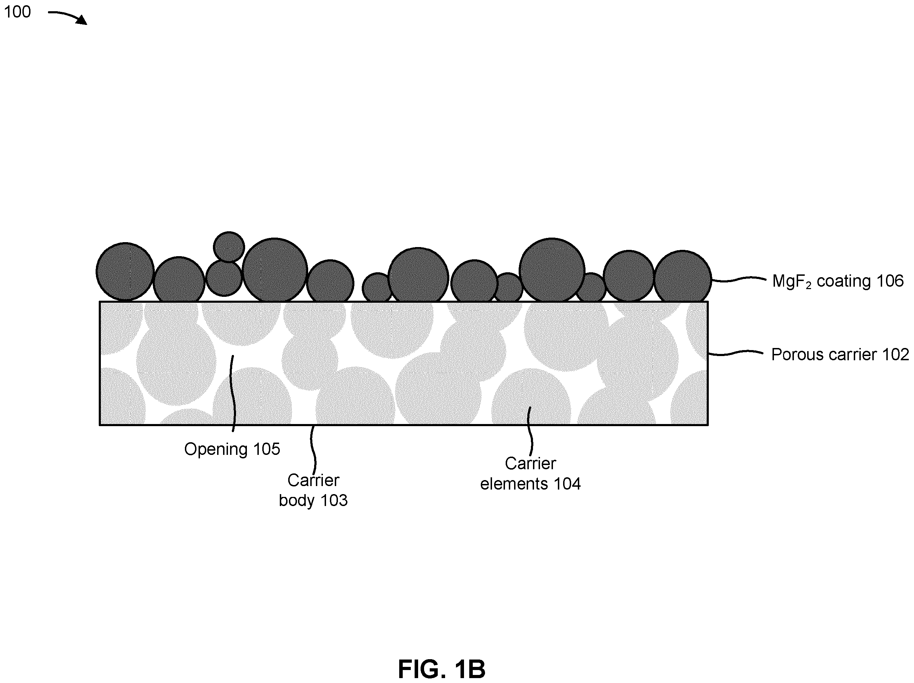

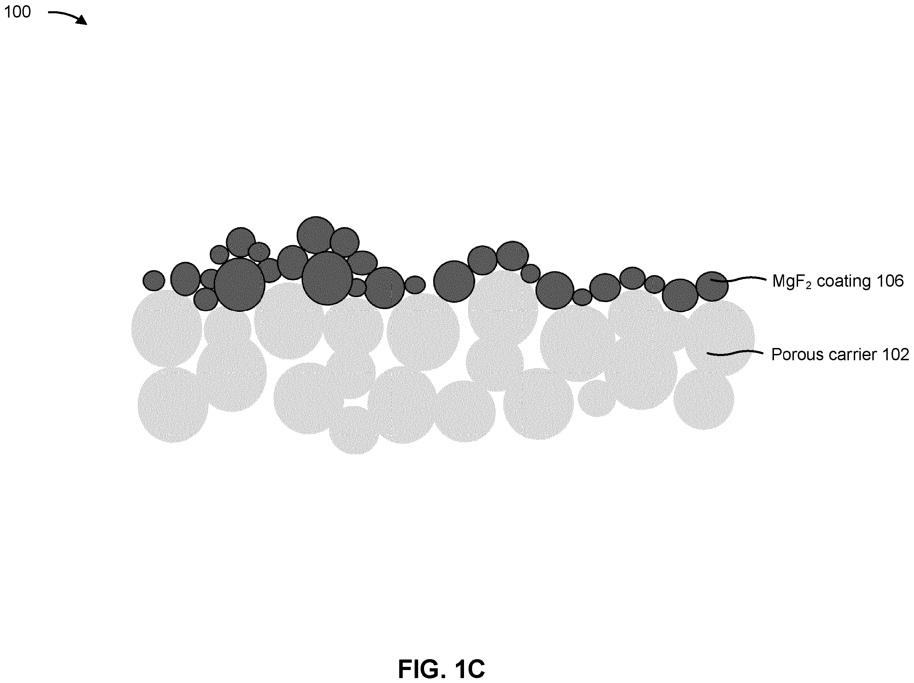

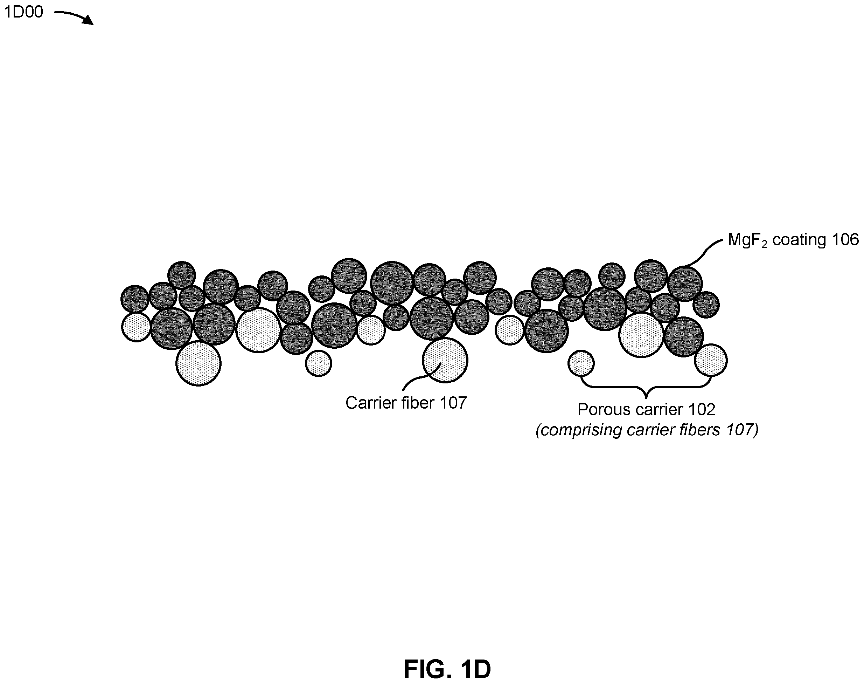

In the example shown in Fig. 1A, the porous carrier 102 includes a carrier body 103 in which plurality of openings 104 (e.g., holes) are formed, with the openings 104 defining pores of the porous carrier 102. In the example shown in Fig. 1B, the porous carrier 102 includes a carrier body 103 that is defined by a plurality of carrier elements 104. Here, the carrier elements 104 are connected such that the porous carrier 102 comprises openings 105 between the carrier elements 104. Here, the openings 105 define the pores of the porous carrier 102. In some implementations, as illustrated in the examples shown in Fig. 1A and 1B, the porous carrier 102 comprises a substantially planar surface, and the MgF₂ coating 106 is formed on this planar surface of the porous carrier 102. However, in some implementations, the porous carrier 102 may comprise a non-planar surface, and the MgF₂ coating 106 may be formed on this non-planar surface of the porous carrier 102, an example of which is illustrated in Fig. 1C. In another example implementation, as shown in Fig. 1D the porous carrier 102 may be formed from a plurality of carrier fibers 107 that are connected to form the porous carrier 102 (e.g., such that there are openings between the carrier fibers 107 of the porous carrier 102). In some implementations, a distribution of a pore size of the separator membrane 100 and/or a surface energy of the separator membrane 100 are at least partially determined by the MgF₂ coating 106, as described in further detail below.

Notably, the examples of the porous carrier 102 shown in Figs. 1A-1D are provided as examples for illustrative purposes. In practice, the porous carrier 102 may comprise any type of carrier having a membrane structure comprising openings such that the porous carrier 102 is porous in nature. In some implementations, the porous carrier 102 can be formed using a variety of techniques, such as by using a fiber-like material, chemical etching, or laser cutting or punching, among other examples.

In some implementations, the porous carrier 102 may comprise one or more organic materials, such as an organic polymer. In some implementations, the porous carrier 102 may comprise one or more inorganic materials, such as an inorganic polymer. In some implementations, the porous carrier 102 may comprise a combination of organic and inorganic materials (e.g., a combination of one or more organic polymers and one or more inorganic polymers). Non-limiting examples of organic polymers that may be included in the porous carrier 102 include a thermoplastic (e.g., a polyester, a polyolefin, a polycarbonate, a polyamide, a polyimide, a polyiminoether, a polyurethane, a polyaniline, a polyariline ether, an acrylic, an acrylate, a polyvinylester, a polyether, a polythiol, a silicone, a fluorocarbon, a co-polymer thereof, or the like), a thermoset (e.g., an epoxy, a polyurethane, an acrylate, melamine formaldehyde, urea formaldehyde, phenol formaldehyde, or the like), or an energy curable material (e.g., an acrylate, an epoxy, a vinyl, a vinyl ester, a styrene, a silane, or the like). Non-limiting examples of inorganic polymers that may be included in the porous carrier 102 include a silane, a siloxane, a titanate, a zirconate, an aluminate, a silicate, a phosphazane, a polyborazylene, a polythiazyl, or a glass (e.g., a borosilicate glass, an alkali glass, an alkali-free glass, a metal oxide glass, or the like). In some implementations, a porosity of the porous carrier 102 alone may be larger than a desired porosity of the separator membrane 100. Thus, the formation of the MgF₂ coating 106 may be performed so as to control the porosity of the separator membrane 100 (e.g., by reducing the porosity as compared to the porosity of the porous carrier 102 alone).

The MgF₂ coating 106 is a coating on the porous carrier 102. In some implementations, the MgF₂ coating 106 at least partially determines a surface energy and/or a pore size distribution of the separator membrane 100. That is, the MgF₂ coating 106 (e.g., alone or in combination with one or more materials, as described below) may define the surface energy of the separator membrane 100 and/or may define the pore size distribution (e.g., a porosity) of the separator membrane 100. In some implementations, the application of the MgF₂ coating 106, which is a chemically inert material, to the porous carrier 102 enhances performance of the separator membrane 100 by increasing a surface energy of the separator membrane 100. With respect to battery cell chemistry, the lower the surface energy of a separator membrane, the higher a repelling property of a surface of the separator membrane. Thus, a lower surface energy slows down the filling of a battery cell with an electrolyte. As compared to materials used in conventional separator membranes, MgF₂ inherently has a higher surface energy than a polyolefin material, meaning that wetting of the separator membrane 100 comprising the MgF₂ coating 106 is improved, and the electrolyte fill time during battery cell assembly is reduced. Further, the MgF₂ coating 106 improves charge transfer during charging of a battery cell comprising the separator membrane 100, while also improving battery discharge performance. Additionally, the use of MgF₂ enables control of a scale of porosity of the separator membrane 100. A conventional separator membrane has a fixed porosity distribution and material properties that introduce challenges with respect to wetting and control of porosity scale. This is important because, in operation, charge carriers can be permitted to going back and forth between an anode and a cathode, while the rest of the battery chemistry should be separated. MgF₂ provides control of porosity at various levels. Thus, the MgF₂ coating 106 can be formed so as to control the surface energy of the separator membrane 100 and the porosity of the separator membrane 100. In general, a higher surface energy is beneficial for an electrolyte chemistry charge interaction and provides an improved pore distribution. Thus, the MgF₂ coating 106 may enable the separator membrane 100 to be used for battery chemistries with a relatively small species that needs to be separated, such as a battery chemistry that comprises lithium sulfate (Li₂S₄), therefore improving the selectivity of the separator membrane

In some implementations, the separator membrane 100 may include one or more other materials on or within a least a portion of the MgF₂ coating 106, such as magnesium oxide (MgO), magnesium oxyfluoride (MgₓF_{y}O_{z}, where 1 ≤ x ≤ 4, 1 ≤ y ≤ 5, 1 ≤ z ≤ 4), or alumina (Al₂O₃). In some implementations, these one or more other materials may serve to further determine or define the surface energy of the separator membrane 100 (e.g., by increasing the surface energy as compared to the MgF₂ coating 106 alone) and/or to further determine or define the pore size distribution of the separator membrane 100. More generally, these one or more other materials can serve to improve or increase control of matching wetting properties, or a surface energy of the separator membrane 100, as defined by a chemical makeup of the surface of the separator membrane 100 to properties of an electrolyte, while also providing a desired pore size distribution of the separator membrane 100. In some implementations, these one or more other materials may increase the range of achievable surface energy of the separator membrane 100 (e.g., as compared to MgF₂ alone).

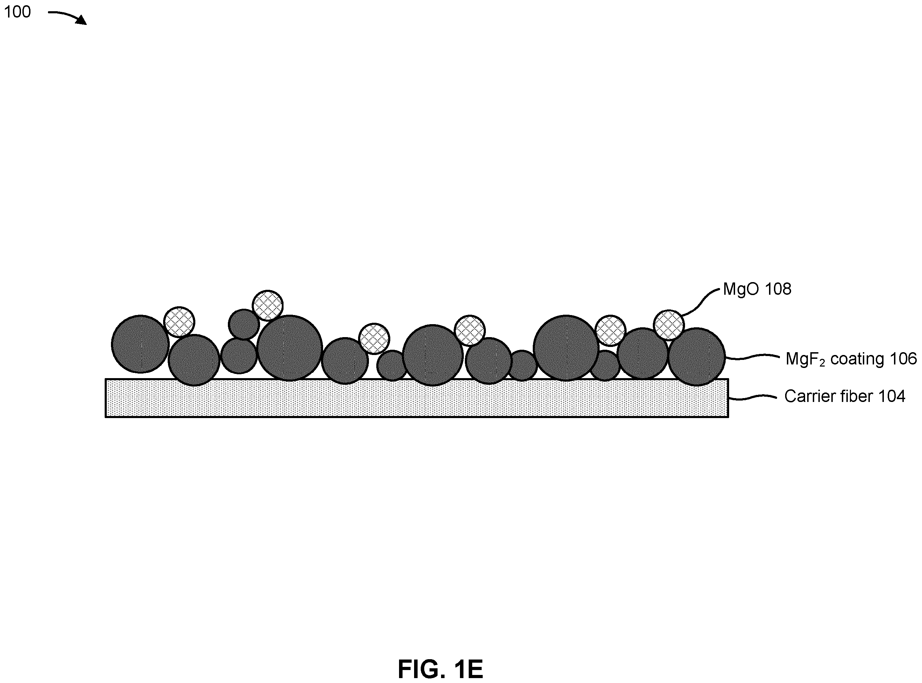

For example, in some implementations, the separator membrane 100 may include a MgO material 108 on or within at least a portion of the MgF₂ coating 106. Fig. 1E is a diagram illustrating an example of a separator membrane 100 including a MgO material 108. In some implementations, the formation of the MgO material 108 may be adjustable (e.g., during fabrication of the separator membrane 100) so as to provide further control (e.g., further increase) of the surface energy of the separator membrane 100, thereby enabling further improvement of electrolyte wetting of the separator membrane 100. As a result, the MgO material 108 may serve to enable faster filling with an electrolyte after a battery cell comprising the separator membrane 100 is assembled, as well as provide improved charge transfer for the battery cell comprising the separator membrane 100.

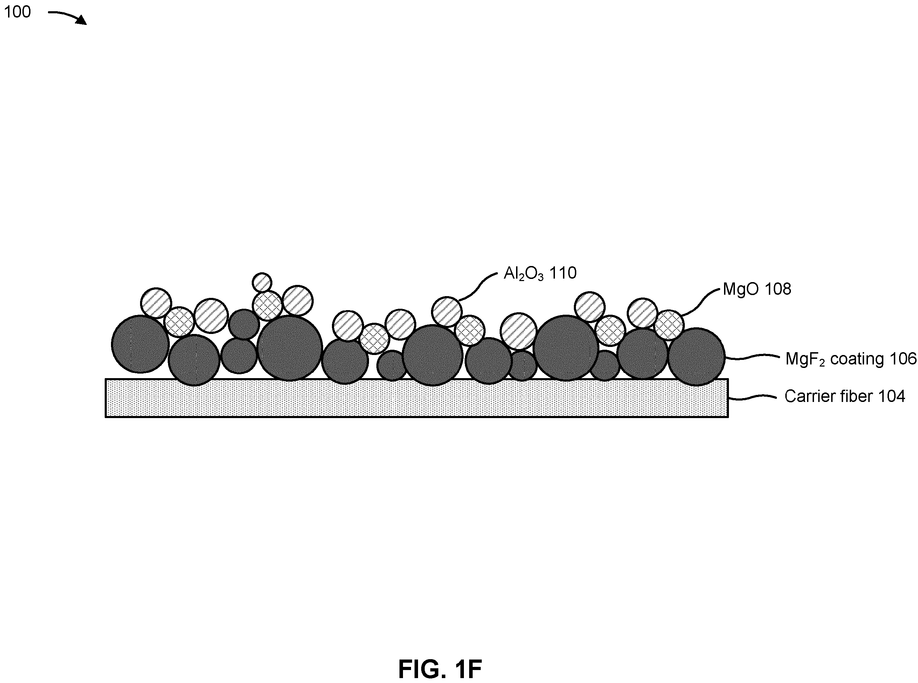

As another example, the separator membrane 100 may in some implementations include an Al₂O₃ material 110 on at least a portion of the MgF₂ coating 106. Fig. 1F is a diagram illustrating an example of a separator membrane 100 including an Al₂O₃ material 110. In some implementations, the Al₂O₃ material 110 enables the surface energy of the separator membrane 100 to be further controlled (e.g., further increased, as compared to MgF₂ alone). In some implementations, a termination of the MgF₂ coating 106 with a separate layer material such as the Al₂O₃ material 110 may enable control of the surface energy of the separator membrane 100 or wetting properties of the separator membrane 100 (e.g., for a given battery cell electrolyte and battery cell architecture).

As another example, the separator membrane 100 may in some implementations include a MgₓF_{y}O_{z} material on or within at least a portion of the MgF₂ coating 106. In some implementations, the MgₓF_{y}O_{z} material may further enable control or improvement of one or more properties of the separator membrane 100 (e.g., surface energy or electrolyte wetting). In general, the MgₓF_{y}O_{z} material may comprise any material on a continuum between pure MgF₂ and pure MgO. In some implementations, a transition between the MgF₂ coating 106 and the MgO material 108 may comprise a variety of species of MgₓF_{y}O_{z} material, the formation of which can be engineered so as to provide a controlled or desired surface energy and/or pore size distribution for the separator membrane 100.

In some implementations, one or more materials of the separator membrane 100 may at least partially determine a distribution of a pore size of the separator membrane 100 and/or a surface energy of the separator membrane 100. For example, the MgF₂ coating 106 and one or more other materials (e.g., the MgO material 108, the Al₂O₃ material 110, and/or the MgₓF_{y}O_{z} material) may at least partially determine a distribution of a pore size of the separator membrane 100 and/or a surface energy of the separator membrane 100. In some implementations, the surface energy of the separator membrane 100 may be engineered so as to be within a range of approximately 35 millinewtons per meter (mN/m) to approximately 1000 mN/m. Notably, different battery cell concepts may require different surface energies of the separator membrane 100 for optimal performance, and the surface energy of the separator membrane 100 can be engineered (e.g., by controlled formation of the MgF₂ coating 106 and the one or more other materials) for a given battery cell concept or application. In some implementations, the distribution of the pore size comprises pore sizes in a range from approximately 2 nanometers (nm) to approximately 1000 nm. Notably, different battery cell concepts may require different pore size distribution of the separator membrane 100 for optimal performance, and the pore size distribution of the separator membrane 100 can be engineered (e.g., by controlled formation of the MgF₂ coating 106 and the one or more other materials) for a given battery cell concept or application.

In some implementations, by adjusting or otherwise controlling a process technique and/or a process condition of deposition of one or more materials (e.g., the MgF₂ coating 106, the MgO material 108, the Al₂O₃ material 110, and/or the MgₓF_{y}O_{z} material) of the separator membrane 100 (e.g., a pressure, a deposition rate, or the like), a microstructure of the one or more materials and, therefore, a pore size and pore size distribution of the separator membrane 100 can be engineered (e.g., to satisfy a performance requirement of a battery cell in a given application). In some implementations, process gases associated with forming the one or more materials, such as nitrogen (N₂), argon (Ar), or oxygen (O₂) can be used in a variety of mix ratios in association with controlling the formation of the one or more materials. In some implementations, a given one of the one or more materials of the separator membrane 100 may be formed using vacuum deposition, wet chemical deposition, or another type of process. In some implementations, a vacuum process associated with formation of the MgF₂ coating 106 and/or one or more other materials of the separator membrane 100 may be performed at a pressure in a range from approximately 10⁻⁶ torr to approximately 100 millitorr (mtorr). Notably, a substrate temperature or a technique for activating a surface may influence layer growth, directionality, or microstructure of the MgF₂ coating 106 or one or more other materials. In some implementations, an engineered balance of amorphous versus crystalline phase controls the microstructure and pore distribution of the separator membrane 100.

In some implementations, a material stoichiometry, including doping of the MgF₂ coating 106 and/or one or more other materials of the separator membrane 100 can be utilized to engineer one or more properties of the separator membrane 100. In some implementations, the stoichiometry of the MgF₂ coating 106 and/or one or more other materials of the separator membrane 100 can be engineered by co-deposition and/or coating chamber conditions: water vapor and oxygen content during deposition changes a MgO to MgF₂, and a MgₓF_{y}O_{z} phase ratio. In some implementations, the MgO phase may improve wetting behavior of the MgF₂ by increasing surface energy of the separator membrane 100, as noted above. This will also improve charge transfer speed through the separator membrane 100.

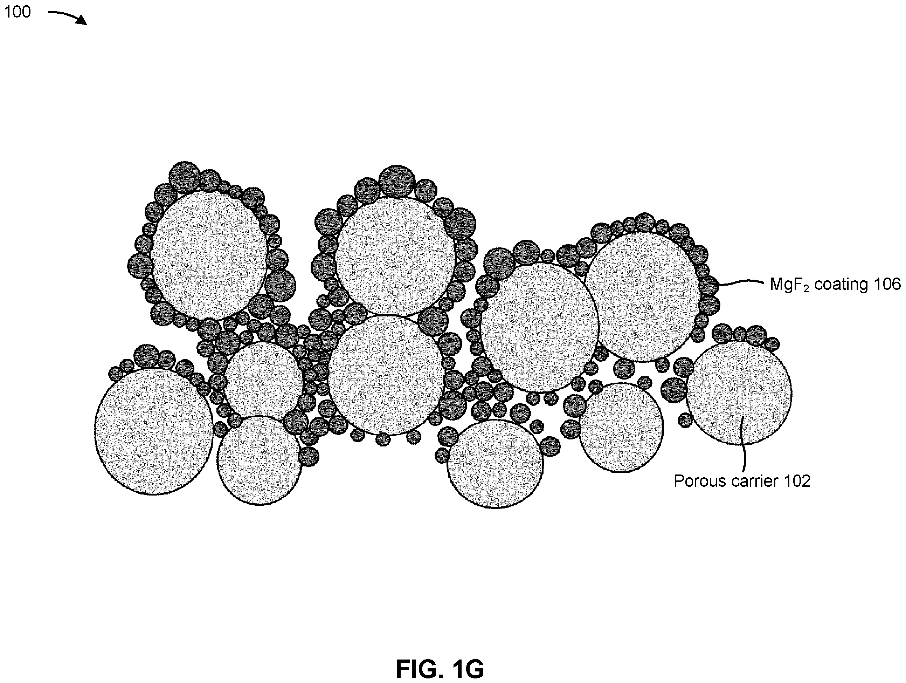

In some implementations, a gas phase chemical deposition process can be utilized that uses an evaporated precursor material that reacts in the gas phase or on the surface of the porous carrier 102 to form a porous layer of MgF₂ that forms the MgF₂ coating 106. The chemical deposition process can be carried out in a pressure range from, for example, approximately 10⁻⁶ torr to approximately 1000 mtorr. The stoichiometry of the MgF₂ coating 106 and the ratio of additional materials, such as MgO, MgₓF_{y}O_{z}, Al₂O₃, or other oxides to engineer surface energy properties, can be adjusted by the use of additional precursors and process gases. The addition of Plasma during processing allows for engineering of the microstructure of the MgF₂ coating 106 to adjust the porosity and/or the surface energy of the separator membrane 100. Fig. 1G is a diagram illustrating an example of an separator membrane 100 formed using a gas phase chemical deposition process. As shown in Fig. 1G, the use of the gas phase chemical deposition process causes the MgF₂ coating 106 to follow a surface of the porous carrier 102 and fill pores as needed.

In some implementations the gas phase chemical deposition process can be performed by using an evaporated precursor that adsorbs on the surface of porous substrate and fills the pores of the porous carrier 102 before forming a layer of MgF₂ on the surface of the porous carrier 102.

In some implementations, a liquid coating process can be utilized to form a layer on the porous substrate that can form colloid particles and/or a polymer network. In some implementations, the layer can be crosslinked via light, heat, or a chemical reaction to form a porous layer of MgF₂ on the porous carrier 102.

In this way, a porosity of the separator membrane 100 may be engineered, meaning that versatility of the separator membrane 100 is increased (e.g., such that the separator membrane 100 can be used in a variety of battery cell chemistries and applications). Further, a surface energy of the separator membrane 100 may be engineered, meaning that performance of a battery cell comprising the separator membrane 100 and/or assembly of a battery cell comprising the separator membrane 100 may be improved.

Further, in some implementations, a thickness of the separator membrane 100 may be reduced (e.g., as compared to a conventional separator membrane that includes a stack comprising two or more layers of material in order to achieve a desired porosity distribution). Additionally, the separator membrane 100 described herein provides chemical stability with respect to battery cell chemistry (e.g., different components and electrolytes), while also providing mechanical stability with respect to stretching and cell deformation. Further, the separator membrane 100 provides mechanical and chemical stability against dendrite penetration. Additionally, the separator membrane 100 may have an improved thermal stability, meaning that a likelihood of melting is reduced and, furthermore, enables an increased thermal operating range (e.g., increasing a thickness of the MgF₂ coating 106 and/or one or more other materials may improve thermal performance). Additionally, the separator membrane 100 described herein reduces an electrolyte fill-time during battery cell assembly (e.g., as compared to a battery cell comprising a conventional separator membrane). In some implementations, the separator membrane 100 described herein provides improved performance for a variety of battery cell chemistries, including, but not limited to, a solid state lithium battery cell, a lithium sulfur battery cell, a sodium ion battery cell, or another type of battery cell chemistry.

As indicated above, Figs. 1A-1G are provided as examples. Other examples may differ from what is described with regard to Figs. 1A-1G.

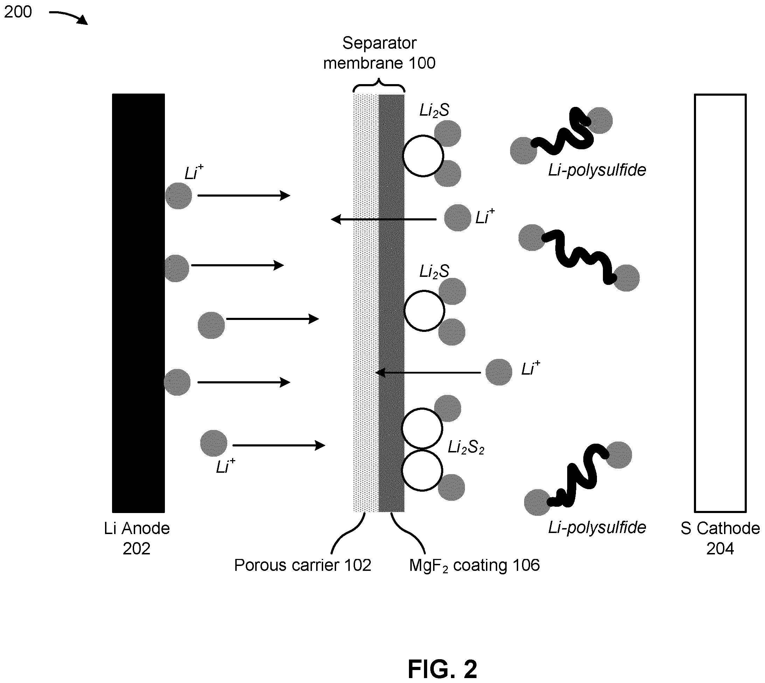

Fig. 2 is a diagram illustrating an example associated with a battery cell 200 that includes the high performance separator membrane 100 described herein. As shown in Fig. 2, the battery cell 200 includes an anode 202 (e.g., a lithium (Li) anode), a cathode 204 (e.g., a sulfur (S) cathode), and the separator membrane 100 comprising (at least) the MgF₂ coating 106.

In the example shown in Fig. 2, the improved porosity distribution provided by the separator membrane 100 prevents shuttling of Li-polysulfides (LiₓS_{y}, with x >2, y > 2) from the cathode side of the battery cell 200 to the anode side of the battery cell 200, which would otherwise diminish the performance of the battery cell 200 over time. As illustrated in Fig. 2, lithium ions (Li+) needed for charge transfer can pass through the separator membrane 100. Notably, a conventional polyolefin separator membrane does not block polysulfide shuttling, meaning that the separator membrane 100 provides improved performance (e.g., as compared to an Li-S battery comprising a conventional polyolefin separator membrane).

As indicated above, Fig. 2 is provided as an example. Other examples may differ from what is described with regard to Fig. 2.

The foregoing disclosure provides illustration and description, but is not intended to be exhaustive or to limit the implementations to the precise forms disclosed. Modifications and variations may be made in light of the above disclosure or may be acquired from practice of the implementations.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiple of the same item.

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

## Claims

1. A separator membrane, comprising:
a porous carrier and
a magnesium fluoride (MgF₂) coating on at least a portion of the porous carrier,
wherein a distribution of a pore size of the separator membrane and a surface energy of the separator membrane are at least partially determined by the MgF₂ coating.

2. The separator membrane of claim 1, further comprising an alumina (Al₂O₃) material on at least a portion of the MgF₂ coating.

3. The separator membrane of claim 1 or claim 2, further comprising a magnesium oxide (MgO) material on or within at least a portion of the MgF₂ coating.

4. The separator membrane of any of claims 1 to claim 3, further comprising a magnesium oxyfluoride (MgₓF_{y}O_{z}, where 1 ≤ x ≤ 4, 1 ≤ y ≤5, 1 ≤ z ≤ 4) material on or within at least a portion of the MgF₂ coating.

5. The separator membrane of any of the preceding claims, wherein the porous carrier comprises at least one of an organic material or an inorganic material.

6. The separator membrane of any of the preceding claims, wherein the surface energy of the separator membrane is within a range of approximately 35 millinewtons per meter (mN/m) to approximately 1000 mN/m.

7. The separator membrane of any of the preceding claims, wherein the distribution of the pore size comprises pore sizes in a range from approximately 2 nanometers (nm) to approximately 1000 nm.

8. A separator membrane, comprising:
a porous carrier, and
a magnesium fluoride (MgF₂) material that at least partially coats the porous carrier, wherein the MgF₂ material at partially determines a pore size distribution of the separator membrane.

9. The separator membrane of claim 8, wherein the pore size distribution of the separator membrane comprises pore sizes in a range from approximately 2 nanometers (nm) to approximately 1000 nm.

10. The separator membrane of claim 8 or claim 9, wherein the MgF₂ material at least partially controls a surface energy of the separator membrane;
optionally, wherein the surface energy of the separator membrane is within a range of approximately 35 millinewtons per meter (mN/m) to approximately 1000 mN/m.

11. The separator membrane of any of claims 8 to 10, further comprising:
an alumina (Al₂O₃) material on at least a portion of the MgF₂ coating; and/or
a magnesium oxide (MgO) material on or within at least a portion of the MgF₂ coating; and/or
a magnesium oxyfluoride (MgₓF_{y}O_{z}, where 1 ≤ x ≤ 4, 1 ≤ y ≤5, 1 ≤ z ≤ 4) material on or within at least a portion of the MgF₂ coating.

12. The separator membrane of any of claims 8 to 11, wherein the porous carrier comprises an organic polymer, an inorganic polymer, or a combination thereof.

13. A separator membrane, comprising:
a porous carrier, and
a magnesium fluoride (MgF₂) material that at least partially coats the porous carrier, wherein the MgF₂ material at least partially controls a surface energy of the separator membrane.

14. The separator membrane of claim 13, wherein the MgF₂ material partially determines a pore size distribution of the separator membrane.

15. The separator membrane of claim 13 or claim 14, further comprising:
an alumina (Al₂O₃) material on at least a portion of the MgF₂ coating; and/or
a magnesium oxide (MgO) material on or within at least a portion of the MgF₂ coating; and/or
a magnesium oxyfluoride (MgₓF_{y}O_{z}, where 1 ≤ x ≤ 4, 1 ≤ y ≤5 1 ≤ z ≤ 4) material on or within at least a portion of the MgF₂ coating.
